# EUROPEAN PATENT APPLICATION

(11) **EP 1 132 243 A1**
(43) Date of publication of application: **12.09.2001**
(21) Application number: 01302245.4
(22) Date of filing: 12.03.2001
(51) Int. Cl.: B60J 10/00

(54) **Weatherseal having a contact layer with multi-modal particle size distribution**

(30) Priority: 10.03.2000 US 522515
(71) Applicant: Schlegel Corporation, Rockford, Tennessee 37853 (US)
(72) Inventor: Gopalan, Krishnamachari, Knoxville, Tennessee 37922 (US); Rigby, A. John, Knoxville, Tennessee 37923 (US)
(74) Representative: Carpmael, John William Maurice

(57) **Abstract**

A weatherseal (10) for reducing noise generation upon relative movement between the seal (10) and a panel (14) is disclosed. The weatherseal (10) includes a plurality of particles forming a surface (42) of a contact layer (40), wherein the plurality of particles has a multi-modal particle size distribution.

## Description

### Field of the Invention

The present invention relates to a seal for contacting a panel, and more particularly, to a weatherseal having a contact layer, wherein the contact layer includes a plurality of particles having a multi-modal particle size distribution, the particles forming a surface roughness for reducing friction and undesirable noise generation upon relative motion between the panel and the seal.

### Background of the Invention

Many vehicles employ windows formed of glass panels, wherein the window may be fixed or moveable relative to a portion of the vehicle. A common construction includes the use of a glass panel in a door, wherein the door and the glass panel move relative to the remainder of the vehicle, and the glass panel moves relative to the door. In this construction, the glass panel is frequently moved between an open position and closed position with respect to the door and/or a portion of the vehicle frame. Increased business transactions such as restaurant, banking and pharmacy services are now regularly offered in a drive-through format. These transactions require the repeated release and engagement of the glass panel and the vehicle. The repeated opening and closing of the glass panel places significant stress on the seal between the glass panel and the vehicle.

Alternative weatherseals are employed at the interface of a fixed panel such as a front or rear window, and the adjacent portion of the vehicle body.

Traditionally, a weatherseal is employed at the interface between the glass panel and the vehicle door and/or the vehicle. The interface between the weatherseal and the glass panel must be sufficient to substantially preclude the penetration of water, air borne particles and air along the periphery of the glass panel, while still permitting ready engagement and disengagement of the glass panel without requiring excessive force.

Conventional sealing structures include a soft synthetic resin or synthetic rubber. However, such weatherseals do not provide for the ready opening and closing of the glass panel relative to the seal. Further, a large force is often loaded on the window glass thus resisting opening or closing of the window glass.

Prior weatherseals often employed a fiber flocking such as polyester on the area in which the weatherseal contacts the glass panel. However, the flocking process is relatively complicated. The complex manufacturing process adds to the cost of the weatherseal. Further, the flocking can be removed or worn away. As the flock is worn from the weatherseal, the loading force substantially increases.

As a solution to the complications associated with flocking, a contact layer can be coated. However, these weather seals often generate noise upon relative motion of the glass panel relative to the seal. This relative motion occurs during intended engagement and disengagement of the panel and the weatherseal as well as when the panel is engaged with the weatherseal. That is, as vibrations are transmitted through a vehicle, the panel often moves relative to the weatherseal and such movement generates noise such as squeak or itch. The noise may be generated between door panels and the vehicle body, such as in upper auxiliary seals as well as window seals. During normal vehicle flexure, previous weather strips have caused noticeable squeaking sounds which are detrimental or offensive to persons in the vehicle. In addition, the relative motion may wear or chafe the paint on the vehicle, leading to corrosion.

Therefore, the need exists for a weatherseal which provides enhanced anti-squeak characteristics, while maintaining the necessary sealing functions. The need also exists for a weatherseal exhibiting reduced friction when engaging and disengaging a panel. A need further exists for a method of forming such a weatherseal.

### Summary of the Invention

The present invention provides a weatherseal for sealingly engaging a panel, wherein the weatherseal reduces friction and noise generation upon relative motion between the weatherseal and the panel, the relative motion including intended engaging and disengaging motions as well as vehicle flexure induced motions. Thus, the present invention provides a weatherseal for releasable engagement with a panel as well as permanent engagement with a panel.

In a first configuration, the present weatherseal includes a contact layer having a contact surface, the contact surface incorporating a plurality of particles in a multi-modal particle distribution, wherein the plurality of particles substantially reduces friction and precludes noise generation upon movement of the panel relative to the weatherseal. The particles of the multi-modal size distribution are selected to form an irregular textured surface for engaging the panel. The specific configuration of the multi-modal distribution is at least partially determined by the intended application of the seal and the operating environments.

### Brief Description of the Drawings

Figure 1 is a perspective view of a vehicle employing a number of seals.

Figure 2 is a cross sectional view taken along lines 2-2 of Figure 1.

Figure 3 is a cross sectional view taken along lines 3-3 of Figure 1.

Figure 4 is a perspective view of a further configuration of the weatherseal.

Figure 5 is a perspective view of an alternative configuration of the weatherseal.

Figure 6 is a perspective view of another configuration of the weatherseal.

Figure 7 is a graph representing a first multi-modal particle size distribution.

Figure 8 is a graph representing a second multi-modal particle size distribution.

Figure 9 is a graph representing a third multi-modal particle size distribution.

Figure 10 is a graph representing a fourth multi-modal particle size distribution.

Figure 11 is a cross section view of a weatherseal showing a distribution of particles in a weatherseal having a multi-modal particle size distribution.

### Detailed Description of the Preferred Embodiments

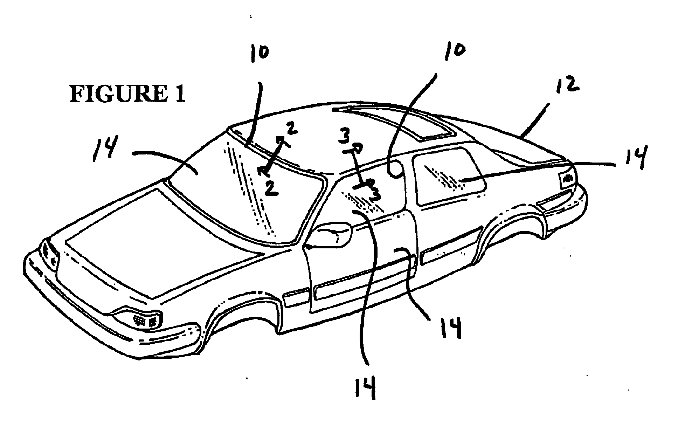

Referring to Figure 1, the weatherseal 10 of the present invention may be employed at various locations on a motor vehicle 12. The weatherseal 10 may be located between a portion of the frame of the vehicle 12 and a moveable portion such as a door or window panel 14. Alternatively, the weatherseal 10 may be located between portions intended to be fixed such as a windshield or a rear window and the vehicle 12.

Although the term panel 14 is used to describe a window, it is understood that panel may be any of a variety of materials such as, but not limited to glass, plastics, composites, or metal, which may be coated, painted, surface treated or bare. Therefore, the panel 14 may include glass such as windows, and metal or composites such as vehicle body parts, which may be intended to be stationary or movable with respect to the panel.

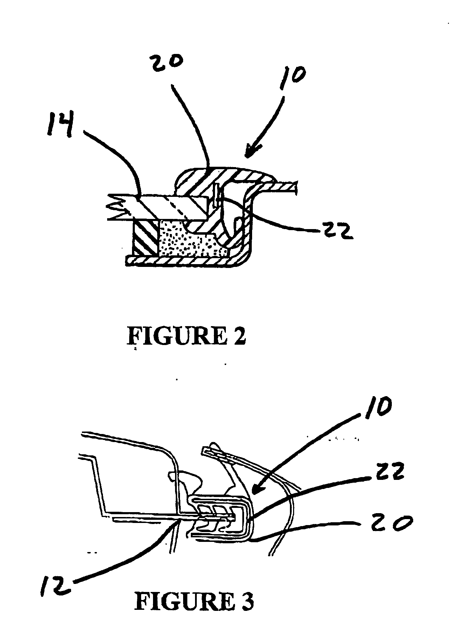

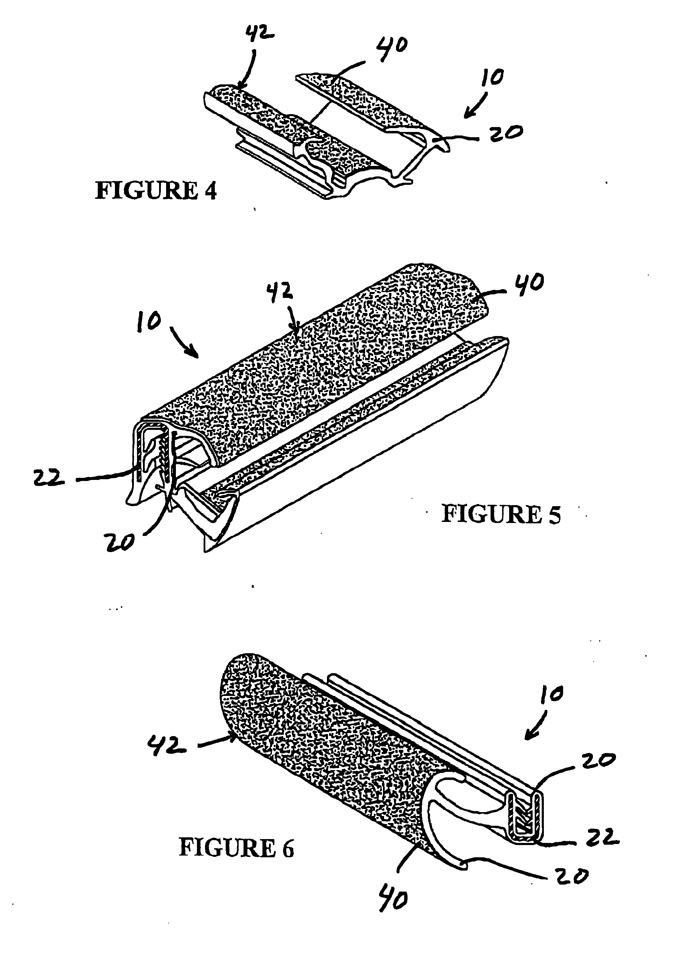

The weatherseal 10 may have any of a variety of cross sectional profiles, such as, but not limited to "U", "J", "C" or "L" shaped. Typical profiles are shown in Figures 2-6.

The present weatherseal 10 includes an elastomeric substrate 20 and a contact layer 40 disposed on portions of the substrate which contact the panel 14.

The substrate 20 forms a base for the contact layer 40 and may be any of a variety of materials. The substrate 20 may be a thermoplastic, thermoset or a combination of thennoplastic portions and thermoset portions. A preferred thermoplastic material includes thermoplastic elastomers or olefinic TPEs. A preferred thermoset material is EPDM. The combination of materials in the substrate may be a selected to provide a desired rigidity and softness for various sections of the weatherseal 10. Additionally, the substrate 20 may include a reinforcing structure 22 such as a metal carrier, wire or thermoplastic material. The substrate 20 may have any of a wide variety of cross-sectional profiles. For example, the cross-section profile may be generally "U", "J", "C" or "L" shaped or planar. Although the substrate 20 is described herein, it is understood the contact layer 40 may be disposed onto any of a variety of supports including portions of the vehicle 12.

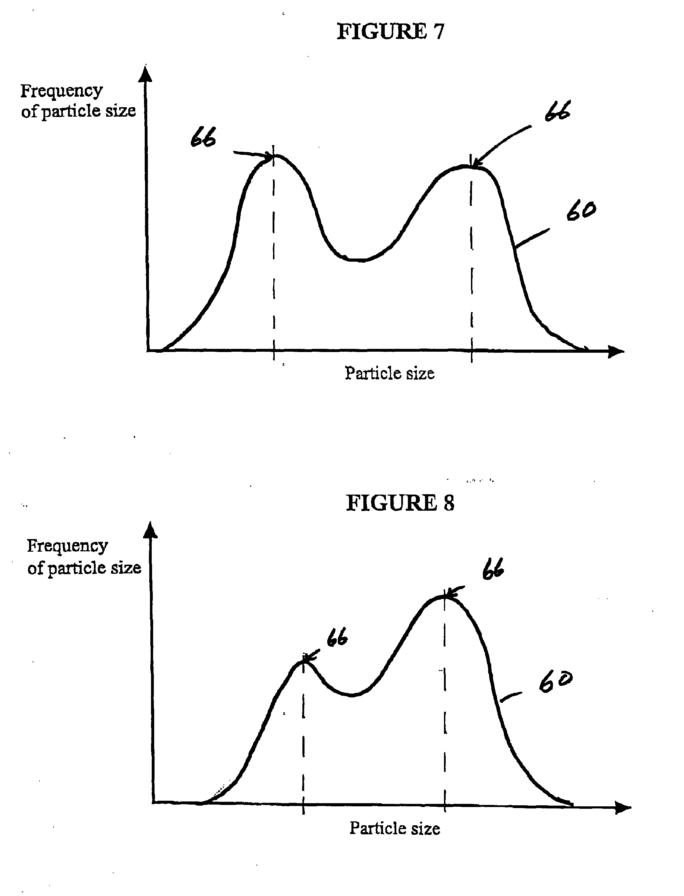

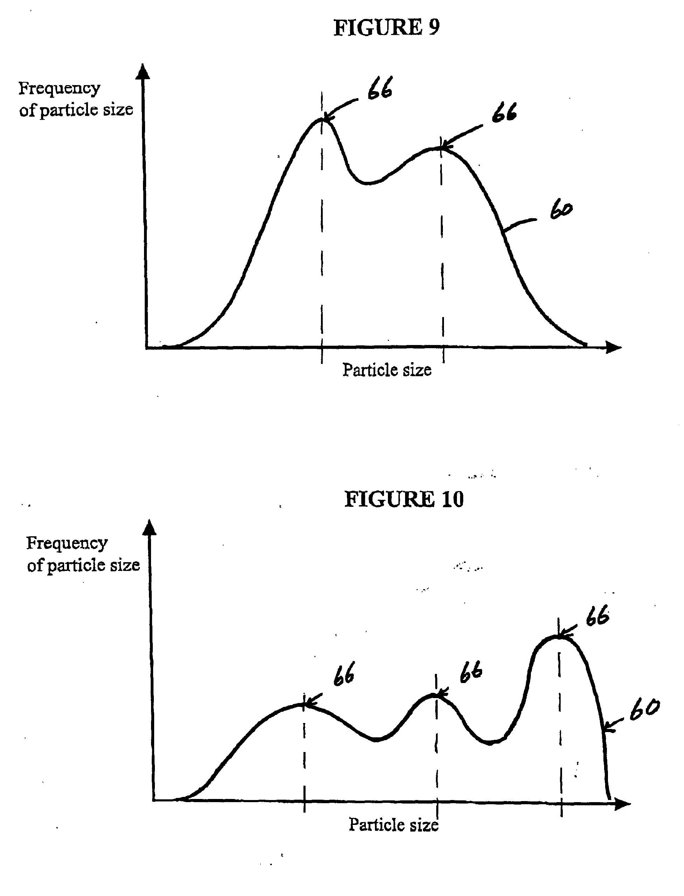

As shown in Figures 2-6, the contact layer 40 is disposed on portions of the substrate 20 and includes a contact surface 42 for contacting the panel 14. Referring to Figures 7-11, the contact layer 40 includes a plurality of particles 50 having a multi-modal particle size distribution forming at least a portion of the contact surface 42. The particles 50 are selected and sized to provide a sufficient roughness in the contact surface 42 to reduce noise generation upon relative movement of the weatherseal 10 and the panel 14, and reduce friction therebetween without sacrificing the desired sealing function. That is, the weatherseal 10 substantially precludes environmental migration across the panel-weatherseal interface under intended operating parameters.

The particles 50 may be uniformly distributed throughout the contact layer 40. Alternatively, the particles 50 may be located proximal to the surface of the contact layer 40. The surface of the contact layer 40 is thus defined by a plurality of projections 44. The projections 44 generally define the contact area between the contact layer 40 and the panel 14. The projections 44 may have a density of approximately 1 to 5 projections per square millimeter. Typically, the projections 44 extend from an adjacent portion of the contact layer 40 by a distance of approximately 5 to 120 microns. It is understood that design considerations may require alternative sized projections, and hence particles.

The projections 44 may be formed as the particles are encapsulated by the contact layer 40. That is, a convex bulge in the contact layer 40 is formed by an underlying particle 50. In addition, the projection 44 may be formed by an exposed surface of the particle 50. That is, the particle 50 is partially embedded in the contact layer 40 and a portion of the particle is exposed as a projection 44.

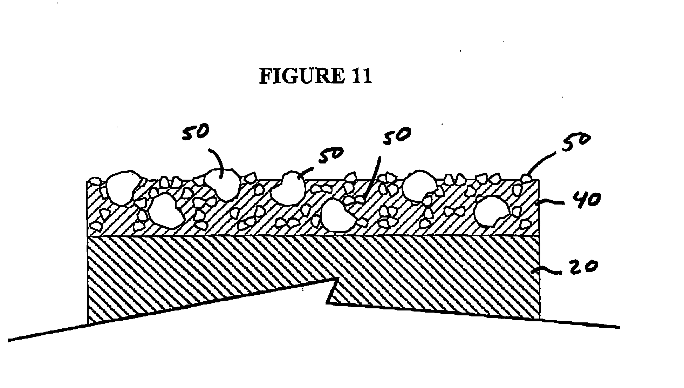

Referring to Figure 11, the contact layer 40 may include a resin 46 which carries the particles 50. The particles 50 and the resin 46 are selected to provide a sufficient bond to preclude separation of the particles from the resin as well as preclude unintended separation of the contact layer 40 from the substrate 20. The contact layer 40 may have any of a variety of thicknesses, as dictated by the intended operating environment of the weatherseal 10. For example, the contact layer thickness may be from approximately 40 microns to approximately 1,000 microns. It has been found that for increased flexibility of the weatherseal 10 a reduced thickness of the contact layer 40 is advantageous. The particle size is selected in conjunction with the desired thickness of the contact layer 40.

The resin 46 may be a thermoplastic resin such as an olefin, and may include polypropylene or polyethylene with a low melt flow index. It is understood that fillers, binders or other additives may be included in the resin 46. Preferably, the thermoplastic resin of the contact layer 40 is selected to bond to the material of the substrate 20 without requiring secondary adhesives. However, it is understood that secondary adhesives may be employed.

Alternatively, the resin 46 of the contact layer 40 may be formed of a thermosetting resin which is curable by any of a variety of mechanisms including chemical, heat, and radiation. Typical materials for the thermosetting resin include, but are not limited to, cross linkable urethane or a rubber based compound such as EPDM and modified EPDM.

The particles 50 may be formed of any of a variety of materials including ceramic, mineral, thermoset or thermoplastic materials. Typical materials for the particles 50 include polyethylene, UHMW (ultra high molecular weight) polyethylene, polypropylene, polyamide or cross linked versions thereof. It is also understood the particles 50 may be surface treated to enhance adhesion in the contact layer. Preferably, the particles 50 are non degrading to the panel 14 and are sufficiently bonded in the contact layer 40 to preclude separation during manufacture, installation or use of the weatherseal 10. The plurality of particles 50 forming the multi-modal particle size distribution may be formed of different materials. That is, a first portion of the plurality of particles may be a first material and a second portion of the plurality of particles may be a second material.

In a first configuration as shown in Figure 7, the plurality of particles 50 define a bi-modal particle size distribution and are retained in the contact layer 40, shown schematically in Figure 11. Preferably, the plurality of particles 50 are chemically bonded to the contact layer 40 to preclude separation during manufacture, installation or use of the weatherseal 10. However, it is anticipated that adhesives or bonding agents may be employed to assist in retention of the particles 50 in the contact layer 40. Preferably, the particles 50 and the contact layer 40 are selected to form a sufficient chemical bond without requiring secondary adhesives. It is also contemplated the particles 50 may be connected to the resin 46 or retained in the contact layer 40 by mechanical connection. That is, the primary retention force results from corresponding structure between the particles 50 and the contact layer 40 to mechanically retain the particles. Further, the particles 50 may be retained by a combined chemical bonding and mechanical retention.

The multi-modal particle size distribution includes bi-modal; tri-modal or higher modality (all being encompassed by the term "multi-modal"). As shown in Figures 7-10, a curve 60 representing the distribution of particle sizes has at least two points "modes" 66 where the slope of a tangent to the curve is zero and the points are local maximums. Alternatively stated, the particle size distribution graph 60 includes at least two points 66 where the first derivative of the distribution function is zero, the two points representing a local maximum rather than a local minimum or inflection point. Thus, the multi-modal particle size distribution curve 60 includes at least two local maximums 66. In a bi-modal particle size distribution curve 60 there are two local maximums 66 and in a tri-modal particle size distribution curve there are three local maximums.

The multi-modal particle size distribution in the contact layer 40 may be accomplished by a variety of mechanisms. For example, particles of different materials may be used, particles of different distribution curves may be used, or even particles of the same material subjected to different processing may be used. For example, a first plurality of particles 50 may be mixed or blended with a second plurality of particles, such that a resulting particle size distribution curve for the mixture has a first mode 66 and a different second mode 66.

It is understood that in the particle size distribution in the contact layer 40, each mode 66 may have a different number (frequency) of particles 50. That is, in a multi-modal particle size distribution, the number of particles 50 of a first mode may be substantially less than or greater than the number of particles of a second mode. In a further configuration, the relative weight of the particles defining a mode 66 within the particle size distribution curve 60 may be equalized. Alternatively, it is contemplated that a relatively equal number of particles 50 may be included in each mode 66. In addition, the size of the particles 50 in each mode 66, local maximum, in the particle size distribution curve may be proximal to each other or spaced from each other. That is, a first mode 66 may have a particle size that is within approximately 3 to 5 percent of the particles 50 in a second mode. Alternatively, the first mode 66 may have a particle size that differs from a particle size of the second mode by more than 5 percent. The particular multi-modal distribution curve may be selected in response to the intended operating environment of the weatherseal 10.

The substrate 20, the contact layer 40 and the plurality of particles 50 are selected such that upon a compressive force against the contact layer and the projections, the particles are not substantially displaced into the contact layer or the underlying substrate. That is, the particles 50 maintain the area of contact between the weatherseal 10 and the panel 14, and the area of contact is not significantly increased upon an increase in the pressure.

### Method of Manufacture

The substrate 20 may be formed by any of a variety of conventional manufacturing methods. Extrusion, molding and forming are all known methods of forming the substrate 20, with or without a reinforcing member 22.

The contact layer 40 may be formed in any of a variety of configurations such as a pre-formed tape, co-extruded with the substrate 20 or a subsequently extruded onto the substrate.

For example, in an extrusion process, the plurality of particles 50 are mixed with the resin 46 of the contact layer 40. The substrate 20 may then be extruded and the mixture of particles 50 and resin 46 is co-extruded or subsequently extruded onto the substrate. If thermosetting materials are employed, subsequent curing by any of the known methods may be employed. It is contemplated that the particles 50 are selected to retain their integrity and avoid substantial degradation upon curing of any thermosetting portion of the weatherseal 10.

Alternatively, the particles 50 may be introduced into the contact layer 40 after extrusion of the contact layer by any of a variety of deposition methods such as spreaders, sprayers or rollers. Thus, the contact layer 40 may include particles 50 which are spread, sprayed or rolled onto or into the resin of the contact layer.

In the tape configuration, the particles 5 are incorporated into a resin, which is formed as a ribbon or tape. The tape may be coextruded with the substrate 20 or subsequently attached to the substrate by mechanical bonding, heat bonding, adhesives or a combination thereof.

While a preferred embodiment of the invention has been shown and described with particularity, it will be appreciated that various changes and modifications may suggest themselves to one having ordinary skill in the art upon being apprised of the present invention. It is intended to encompass all such changes and modifications as fall within the scope and spirit of the appended claims.

## Claims

1. A weatherseal for engaging a panel in a vehicle, comprising:
(a) a contact layer having a contact surface engaging the panel; and
(b) a plurality of particles in the contact layer forming a roughness in the contact surface, the plurality of particles defining a particle size distribution having two local maximums.

2. The weatherseal of Claim 1, wherein a frequency of particles at a first local maximum is equal to a frequency of particles at a second local maximum.

3. The weatherseal of Claim 1, wherein a frequency of particles at a first local maximum is greater than a frequency of particles at a second local maximum.

4. The weatherseal of Claim 1, further comprising a substrate supporting the contact layer, the substrate being one of a thermoplastic and a thermoset material.

5. The weatherseal of Claim 1, wherein the particles are one of a ceramic, mineral, thermoset or thermoplastic materials.

6. The weatherseal of Claim 1, wherein the particles are one of polyethylene, UHMW polyethylene, polypropylene, polyamide and cross linked versions of polyethylene, UHMW polyethylene, polypropylene or polyamide.

7. A weatherseal for contacting a panel in a vehicle, comprising a contact including a sufficient number of particles in a multi-modal particle distribution to substantially preclude noise generation upon movement of the panel relative to the weatherseal.

8. An interface between a seal and panel, comprising a contact surface at least partially defined by a plurality of particles having a multi-modal particle size distribution.

9. The interface of Claim 8, wherein the multi-modal particle size distribution includes two modes.

10. The interface of Claim 8, wherein a frequency of a first mode is substantially equal to a frequency of a second mode.

11. The interface of Claim 8, wherein a frequency of a first mode is greater than a frequency of a second mode.

12. The interface of Claim 8, wherein a frequency of a first mode is less than a frequency of a second mode.

13. The interface of Claim 8, wherein the modes are local maximums.

14. The interface of Claim 8, further comprising a base supporting the contact surface,

15. The interface of Claim 8, further comprising contact layer to which the particles are connected.

16. A weatherseal comprising:
(a) a substrate of a first elastomeric material;
(b) a contact layer of a second different material; and
(c) a plurality of particles in the contact layer, the particles having a multi-modal particle size distribution.

17. A method of forming a weatherseal, comprising disposing a plurality of particles on a contact layer of the weatherseal to attach to the contact layer, the particles having a multi-modal particle size distribution.
